# EUROPEAN PATENT SPECIFICATION

(11) **EP 1 412 618 B1**
(45) Date of publication and mention of the grant of the patent: **07.01.2009**
(21) Application number: 02751160.9
(22) Date of filing: 24.07.2002
(51) Int. Cl.: F01D 11/00, F16J 15/08, F16J 15/12

(54) **SEAL ELEMENT FOR SEALING A GAP AND COMBUSTION TURBINE HAVING A SEAL ELEMENT**
SPALTDICHTUNG UND GASTURBINE MIT EINER SPALTDICHTUNG
ELEMENT D'ETANCHEITE SERVANT A FERMER HERMETIQUEMENT UN INTERSTICE ET TURBINE A COMBUSTION EQUIPEE D'UN TEL ELEMENT D'ETANCHEITE

(30) Priority: 04.08.2001 GB 0119098
(43) Date of publication of application: 28.04.2004
(73) Proprietor: SIEMENS AKTIENGESELLSCHAFT, 80333 München (DE)
(72) Inventor: REICHERT, Arnd, 45481 Mülheim (DE)
(86) International application number: PCT/EP2002/008257
(87) International publication number: WO 2003/014530

(56) References cited:
- EP-A- 0 545 589
- US-A- 5 586 773
- US-A- 5 657 998
- US-B1- 6 199 871
- US-B1- 6 237 921

## Description

### BACKGROUND OF THE INVENTION

### Field of the Invention

The invention relates to a seal element for sealing a gap which may be formed between spaced-apart first and second components, in particular of a turbo machinery like a combustion turbine. The invention also relates to a combustion turbine having a seal element.

In industrial plants, particularly thermo-mechanical machines and chemical plants, in which different fluids are used, it may be necessary to keep those fluids separate from one another within the plants. For example, in thermal combustion power plants, flow regions of hot combustion gases have to be separated sealingly from flow regions of cooling gases of lower temperature. In gas turbine plants with high turbine inlet temperatures, for example of more than 1000 °C, thermal expansions of the individual components of the gas turbine plant occur, so that adjacent components are sometimes spaced from one another through the use of a gap in order to avoid high thermal stresses and the formation of cracks. Such gaps may constitute connections between flow regions of hot gases and flow regions of cold gases. It is advantageous to seal off the gap to reduce the inflow of cold gas into the flow region of hot gases so as not to thereby lower the temperature in the flow region of hot gases.

U.S. Pat. No. 3,341,172 and U.S. Pat. No. 2,991,045, each of which describes a gas turbine with an outer casing and a two-part inner casing, accordingly specify a sealing element that has a cross-section in the shape of an elongate C for sealing a gap between the two inner casings. An annular gap, through which cooling fluid is guided, is formed between the inner casing and the outer casing. The hot gas for driving the gas turbine flows within the inner casing.

U.S. Pat. No. 4,537,024 describes a gas turbine plant, in which components of a nozzle structure are sealed through the use of axial and radial sealing elements. The sealing elements are intended to prevent hot gas which flows through the nozzle structure from infiltrating into turbine regions outside the hot-gas duct. A sealing element can have approximately the shape of a squashed eight as seen in cross-section.

U.S. Pat. No. 5,975,844 describes in an assembly including two mutually thermally movable components each having a component groove located one opposite the other, a sealing element. This sealing element is directed along a main line for sealing a gap between the components. It comprises a first end, a second end opposite the first end and a middle region, in a cross-section substantially perpendicular to the main line, along a centre line, whereby the middle region is disposed between the ends and the sealing element having a toothed first surface.

U.S Pat. No. 5,657,998 relates to a gas-path leakage seal for generally sealing a gas-path leakage-gap between spaced-apart first and second members of a gas turbine, in particular first and second segments of a gas turbine combustor casing. This seal comprises a generally imperforate foil-layer assemblage consisting essentially of materials selected from the group consisting of metals, ceramics, and polymers. This foil-layer is impervious to gas and it is disposed in the gas-part leakage-gap. The foil-layer assemblage having a first foil-layer with a lengthwise direction. The gas leakage seal further comprises a cloth-layer assemblage covering and contacting generally the entire first foil-assemblage outer surface and consisting essential of materials selected from the group consisting of metals, ceramics and polymers. Preferably the cloth-layer assemblage has two layers each have a thickness of about 10-25 microns. The cloth-layers each are woven cloth-layers and each comprises a high temperature, nickel-based super-alloy, such as Inconel X-750. The seal assemblage is either fixed in grooves of adjacent parts of a gas turbine, or introduced in a U-shape flange of a combustor, or used in a twin-seal installation or in a multi-seal installation. In either case the seal fully lies within the leakage-gap, and provides a sealing effect either by contacting a surface within the gap, being inserted in a groove or contacts another seal assemblage. In comparison to a conventional metal rigid seal this seal with two foil-assemblages reduces the gas-path leakage from 2.4% to generally 1.0% according to U.S.Pat No. 5,657,998.

A further prior art is illustrated in US patent No. 6,199,871.

### SUMMARY OF THE INVENTION

It is an object of the invention to provide a seal element for sealing a gap, in particular a gas-path leakage gap of a turbo machinery like a combustion turbine. It is a further object of the invention to provide a combustion turbine with a seal element.

With the forgoing and other objects in view there is provided in accordance with the invention, a seal element for sealing a gap between a first component a second component as in claim 1.

The invention takes into consideration the perception that in an apparatus having parts being exposed to different temperatures different thermal expansions and deformations occur. For example in furnaces or more general hot gas chambers, as in a gas turbine, those parts being exposed to a hot gas during the stationary operation conditions of the apparatus are exposed to higher temperatures than those parts, in particular wall components, not directly exposed to the hot gas. The resulting different thermal expansions of the parts are compensated by gaps left between parts for freely expanding. In combustion turbines for example it is often necessary to hinder the hot gas to flow through the gap, as parts behind the gap may not be capable to withstand the high temperature of the hot gas. Therefore cooling fluid under a higher pressure than the hot gas is fed to the gap. A portion of this cooling gas than flows as leakage-gas through the gap into a stream of the hot gas thereby hindering the hot gas to flow into the gap. In a gas turbine this high pressure cooling gas is taken from the compressor of the gas turbine and due to the leakage through the gap can not be used for the combustion process which reduces the efficiency of the gas turbine. To reduce the amount of leakage gas seal elements are provided for sealing the gap. Design and manufacture of suitable seal elements becomes the more difficult the more curved the shape of the gap is, the higher a lateral movement of the gap is and the higher the temperature of those surface which are in contact with the seal element become. A even more complicated situation arises when those surface become permanently uneven, in particular due to relaxation processes or inelastic deformations.

With the seal element according to the invention the contacting members cope with those deformations and movements of the first and second components, while the sealing structure still contacts the surface and so preventing cooling fluid from flowing between sealing structure and surfaces. By choosing suitable materials for the support structure and the sealing structure respectively the seal element can be used for temperatures of over 500 °C and up to over 1300 °C. Unlike other seals as one-piece metallic seals or metallic brush seals, which are capable to cover only a certain movement of the gap or are quite expensive, need a rather large space and can only be used for slightly curved surfaces the seal element according to the invention is simple to manufacture, cost efficient, capable to cope with curved surfaces as well as steps in the surfaces and is able to follow movements and deformations of the gap or the surfaces.

According to the invention the sealing function performed by the sealing structure is separated from the ability of elastic deformation performed by the support structure. By use of at least two contacting members the seal element is less stiff then a one-piece metallic seal wherein the metallic structure also fulfils the sealing function. As preferably each contacting member has the ability for deformation and movement independently from the others a sealing of large deformed or uneven surfaces is possible. This also includes surfaces having steps, which can occur in attached segments of a gas turbine, like blades, vanes, heat shield elements of a combustion chamber.

In accordance with another feature of the seal element the sealing structure comprises a web having metallic and/or ceramic fibres. By virtue of the web of ceramic or metallic fibres which form a flexible and deformable sealing portion a good sealing performance can be assured. Ceramic fibres as well as certain metallic fibres can be used up to temperatures of about 1200 °C or even more. The seal element is therefore useable for sealing components of a turbo machinery, furnaces, burners or the like, which are exposed to hot gases. Depending on the mesh-size of the web the sleeving and therefore the seal-element is gas pervious, so to some extend the cooling gas may flow through the sleeving thereby cooling the fibres. This leads to an effusion cooling of the seal element. Also regions and turbine parts in the vicinity of the gap outside of the cooling gas region can be cooled by the cooling gas penetrating the sealing structure.

In accordance with a further feature the sealing structure comprises a ceramic fibre fabric, a ceramic fibre tape, a ceramic fibre sleeving or a ceramic fibre mat. Preferably the ceramic fibres essentially consisting of a material like Zirconia (ZrO₂), Silica (SiO₂) or Alumina (Al₂O₃). It is understood that those ceramic materials could be combined and also be stabilised by other materials like Yttria (Y₂O₃). For example the ceramic fibres may essentially consist (in weight %) of 62.5% Al₂O₃ , 24.5% SiO₂, 13% B₂O₃ with a crystal phase of Mullite-type and amorphous or solely amorphous; of 70% Al₂O₃ , 28% SiO₂, 2% B₂O₃ with γ-Al₂O₃, Mullite and amorphous SiO₂; of 73% Al₂O₃, 27% SiO₂ with γ-Al₂O₃ and amorphous SiO₂, of 89% Al₂O₃, 10% ZrO₂, 1% Y₂O₃ with α-Al₂O₃ and Yttria stabilised Zirconia; of 85% Al₂O₃ and 15% SiO₂ with α-Al₂O₃ and Mullite; of >99% Al₂O₃ as α-Al₂O₃. Such ceramic fibre materials are for example available from 3M (Minnesota Mining and Manufacturing Company), St. Paul, Minnesota, USA under the Trademark of "Nextel". The manufacturing of ceramic fibres as well as the manufacturing of a web comprising ceramic fibres are know to those skilled in the art. Therefore a suitable web comprising ceramic fibres fulfilling specified properties, in particular heat resistance up to over 1200 °C to about 1372 °C, flexibility and other mechanical features may be chosen by those skilled in the art to provide a sealing structure bounded to or just covering the support structure. Other features like porosity and decree of gas perviousity can be provided in a predefined range.

In accordance with an added feature the sealing structure comprises a metallic fibre fabric, a metallic fibre tape, a metallic fibre sleeving or a metallic fibre mat. As metallic fibres are quite ductile and not brittle they are as well elastically as plastically deformable and form a web which resists high thermal and mechanical loads. Preferably the metallic fibres consist of a superalloy, in particular a nickel-based, a cobalt-based or iron-based superalloy

In accordance with an additional feature the sealing structure is loosely connected to the support structure. The sealing structure preferably itself is an object manufactured separately from the support structure. It is put in contact with the support structure for covering at least a portion of the support structure after its own manufacturing. So it preferably provides a loose contact with the support structure and is removable from the support structure. In the latter case it could easily be replaced during maintenance of a turbo machinery by a new web. In an embodiment in which the sealing structure is provided as a sleeving the support structure is introduced into the sleeving and so all surfaces of the support structure are surrounded by the web of fibres. It is also possible to provide a ceramic fibre sealing structure, for example a layer, tightly bounded to the support structure.

In accordance with yet another feature the support structure consists of a metal, in particular a sheet metal. Having a support structure of a metal allows a simple manufacturing of the contacting members, for example by simply cutting slits into the metal. Suitable metals are those who withstand high temperatures, for example high temperature steels like chromium steels or high temperature alloys on the basis of nickel or cobalt. The metal piece may extend along a centre line, whereby slits and/or recesses parallel and or perpendicular to the centre line lead to independently deformable contacting members, in particular vat-like contacting members. Such a piece of metal may also be bent or curved along the centre line and around the centre line, so that either a cylindrical shape or ring shape can be easily achieved. Having a support structure with slits and/or recesses reduces the stiffness. So compared to a more stiff structure larger deformations can be carried out under the same internal stress applied

In accordance with yet a further feature the support structure has a curved form, in particular is U-shaped, open-ring shaped or ring-shaped. A curved support structure can be pre-stressed when put into contact with the surfaces, so that deformations of the surfaces which compress the support structure or give the support structure the opportunity to expand will coped by the contacting members without losing contact with the surfaces.

In accordance with yet an added feature the support structure has a frame portion to which said contacting members are connected via a branch portion extending away from said frame portion. The contacting members may have a vat-like form. Having a branch portion to which the contacting member is connected assures for the contacting member the ability to deform and move in a three-dimensional way. The branch portion and the contacting member may in addition be twisted and bent.

The branch portions may form together with a middle portion a two-arm spring. In such a spring each branch portion forms one arm of the spring, whereby in the middle portion the spring may be bent to form one or more loops. With the middle portion the spring may be connected to the frame portion, which frame portion may have a suitable opening, hook or the like. The spring may be made of any suitable wire, preferably metallic wire, whereby the contacting members may be formed a bend wire portions. Preferably the branch portion and the contacting member are elastically deferrable.

In accordance with yet an additional feature the support structure has at least two branch portion with different length. Having branch portions with different length is in particular useful when surfaces with steps, grooves, recesses or ridges have to be sealed.

In accordance with a concomitant feature the seal element comprises a tightening member for tightening said sealing structure between two adjacent contacting members. Preferably the tightening member comprises a spring member, in particular a spring ring. Applying a tightening member for tightening the sealing structure insures that the sealing structure is in close contact with the surfaces so that during different operating conditions, different temperatures and during a long period of time the seal element assures a good sealing effect. In particular in a seal element with a support structure surrounded by a sleeking, this sleeking may form a pleat which will be smoothened by a tension created by the tightening member. The tightening member may be permanently connected to the seal element, in particular to the sealing structure or it may be removable connected to the seal element. So the seal element may comprise two or three distinct parts (sealing structure, support structure, tightening member) which fulfil different tasks and which can be separated from each other, in particular replaced by other compatible parts in case of repair, maintenance or renewal.

In accordance with again another feature the seal element is placed in a hot gas chamber for sealing a gap. The hot gas chamber has a hot-gas flow region surrounded by a wall structure, which comprises the second component with the second surface. A first component being attached to the wall structure and having the first surface, which is directed to the wall structure. The gap is formed between the first component and the second component, in particular between the first surface and the second surface. The sealing structure is in contact with the second surface of the second component and with the first surface of the first component thereby sealing the gap. Preferably the hot gas chamber is a part of a combustion turbine, in particular is a combustion chamber or a turbine section. The combustion chamber may be one of a jet engine, a turbine of an automotive or a submarine or the like. It may also be the combustion chamber of a stationary gas turbine in particular one for producing electrical power. The combustion chamber may be a ring chamber or a can-like chamber, whereby in a gas turbine two or more can-like combustion chambers may be used. In a combustion turbine having a number of burners, with each burner connected to a turbine section by a separate duct or can, a seal element as described above may serve to seal a turbine inlet for hot gas to enter the turbine section and a respective duct (can) ending in the vicinity of the turbine inlet for allowing hot gas to flow from the burner to the turbine inlet.

In accordance with again a further feature the seal element seals a gap, wherein the first component is a heat shield element of a combustion chamber or a shroud element of a turbine section. In a ring combustion chamber a metallic heat shield may be multiply curved, so that the seal element with contacting members following the shape and the deformation of the surfaces of the heat shield is most efficient. In a can-like combustion chamber the seal element is preferably used to seal the region between can and entrance into the turbine section. It may also be used for sealing a gap between metallic heat shield elements with a closed loop cooling fluid circuit and a wall structure.

The seal element may also be used to seal off a gap between components which are not spaced apart in radial direction of a gas turbine but disposed in axial and circumferential direction, wherein at least first and second of the components are spaced apart in the circumferential direction or in the axial direction by a leakage-gap. Those components have an inner surfaces exposed to the hot gas region and an outer surfaces exposed to the cooling gas region. The seal element can be used to seal either a gap between first and second components in the axial direction or between first and second components in the circumferential direction.

In accordance with another object of the invention it is provided a combustion turbine having a gas-leakage gap which is seal by a seal element. The combustion turbine comprises a hot gas chamber having a hot-gas flow region , a wall structure surrounding the hot-gas flow region and comprising at least one second component having a second surface directed to the hot-gas flow region. At least one first component is attached to the wall structure and has a first surface, which is directed to the wall structure. The gap is formed between the first component and the second component, in particular between the first surface and the second surface. The seal element for sealing the gap comprises a support structure and a sealing structure covering at least partially the support structure. The support structure comprises at least two contacting members, each of which puts a portion of the sealing structure in contact with one of the surfaces and being capable of following a deformation of the respective surface. The sealing structure further being in contact with said second surface of the second component and with the first surface of the first component thereby sealing the gap.

The support structure has a frame portion to which said contacting members is connected via a branch portion extending from said frame portion.

In accordance with yet another object of the invention it is provided a combustion turbine having a gap between a duct and a turbine inlet, which gap is seal by a seal element. The turbine inlet is an opening which allows hot gas to enter a turbine section of the combustion turbine. The duct connects a combustion chamber of a burner, in which the hot gas is generated to the turbine inlet.

All of the advantages and features of the seal element described in more detail above also hold for the combustion turbine having this seal element, in particular the features and advantages with respect to the seal element comprising a curved frame portion from which the contacting members are spaced apart and whereby each contacting member being connected to the frame portion via a branch portion. Preferably the seal element is surrounded by the sealing structure being a sleeving.

Although the invention is illustrated and described herein as embodied in a seal element for sealing a gap and a combustion turbine, it is nevertheless not intended to be limited to the details shown, since various modifications and structural changes may be made therein without departing from the spirit of the invention and within the scope and range of equivalents of the claims.

The construction of the seal element and the turbine of the invention, however, together with additional objects and advantages thereof will be best understood from the following description of specific embodiments when read in connection with the accompanying drawings.

### BRIEF DESCRIPTION OF THE DRAWINGS

FIG. 1 is a fragmentary, diagrammatic, longitudinal-sectional view of a combustion turbine;
FIG. 2 is an enlarged, fragmentary, cross-sectional view of a seal element in a combustion turbine;
FIG. 3 is a fragmentary plan view of a sealing structure of a seal element;
FIG 4. is a cross-sectional view of a seal element along line III-III of FIG. 3;
FIG. 5 is fragmentary winding off view of a sealing structure along line III-III of FIG. 3;
FIG. 6 is a perspective view of a ring shaped seal element.
FIG. 7 is a fragmentary, diagrammatic, longitudinal-sectional view of a combustion turbine;.
FIG. 8 is a perspective view of the burner section of the combustion turbine of Fig. 7;
FIG. 9 is a perspective view of a support structure of a seal element;
FIG. 10 is a winding off view of the support structure of FIG. 9.

### DESCRIPTION OF THE PREFERRED EMBODIMENTS

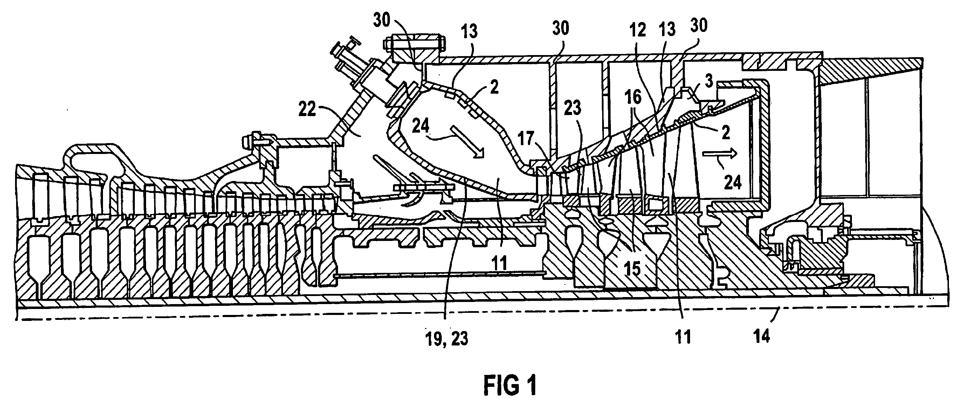

Referring now to the figures of the drawings in detail and first, particularly, to FIG. 1 thereof, there is shown a in a cross-sectional view an upper portion of a combustion turbine (in the following also called gas turbine) 22 directed along a main axis 14. The gas turbine 22 has along said main axis 14 a compressor (not further specified), a combustion chamber 19 and a turbine section 17. Both combustion chamber 19 and turbine section 17 form a hot gas chamber 23 through which hot gas 24 generated in the combustion chamber 19 by burning air and fuel flows. In the turbine section 17 guide blades 16 and moving blades 15 are arranged in an alternating order along the main axis 14. The guide blades or vanes 16 are directed perpendicular to the main axis 14 and are disposed along the circumference of the gas turbine 22 so as to form a circle.

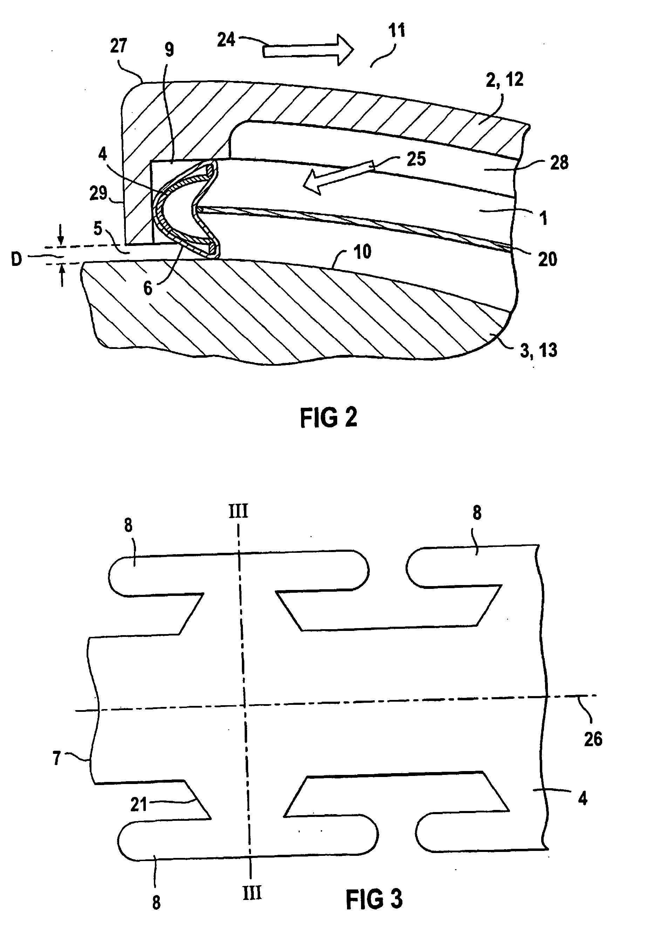

The gas turbine 22 comprises a respective wall structure 13 surrounding the combustion chamber 19 and the turbine section 17. The respective wall structure 13 comprises second components 3 which - with respect to the combustion chamber 19 - are shown in more detail in FIG. 2. Surrounded by and attached to the wall structure 13 first components 2 are exposed to the flow of the hot gas 24. A cooling gas region 28 is formed between the first components 2, for example a guide-blade plate 12 or a heat shield element of the combustion chamber 19 and the components 3 of the turbine wall structure 13. Cooling gas 25 is fed through cooling gas supply lines 30 in the respective cooling gas region 28.

The guide blades 16 are each connected to the wall structure 13 in the turbine section 17 through a guide blade plate 12, which represents a first component 2. A guide blade plate 12 is also referred to as shroud or the sealing strip on turbine blades. Its purpose is to supply rigidity to the blades, lessen vibration and provide to some extend a sealing between stages.

Adjacent guide blades 16 are spaced apart from one another along the circumference so that they can essentially freely expand thermally. The guide-blade plate 12 separates the hot-gas region 11 formed around the main axis 14 of the gas turbine 22 from a cooling gas region 28 formed between the guide-blade plate 12 and the components 3 of the turbine wall structure 13. The moving blades 15 extend radially outward perpendicular to the main axis 14. The moving blades 15 lie completely within the hot-gas region 11. This hot-gas region 11 is separated from the cooling-air region 28 by a plurality of first components 2, also called as components of a seal ring, along the circumference of the gas turbine 22. The components 2 are each adjacent to the moving blades 15. For the sake of clarity, only one guide blade 16, one moving blade 15 and one component 2 of the seal ring is shown for each turbine stage. A respective component 2 and guide-blade plate 12 is spaced apart from a respective component 3 of the wall structure 13 in the radial direction (direction perpendicular to the main axis 14) through a gas-leakage gap 5 (see FIG. 2).

This gap 5 is sealed off by a seal element 1, thereby largely preventing a flow of cooling gas 25 out of the cooling-gas region 28 into the hot-gas region 11 and preventing hot gas 24 from flowing through the gap 5 in the cooling gas region 28..

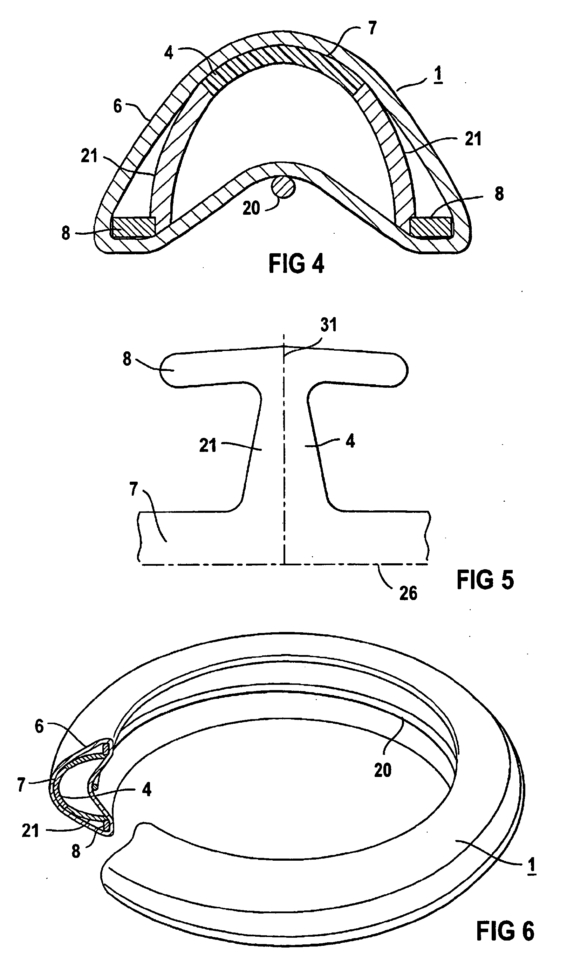

FIG. 2 shows an enlarged cross-sectional view of a portion of a combustion chamber 19 like the one shown in FIG. 1. A seal element 1 is positioned between a first component 2, which is a heat shield element of the combustion chamber 19, and a second component 3, which is part of a wall structure 13 surrounding the combustion chamber 19. The heat shield element 2 has a side wall 29 directed towards a second surface 10 (also called an outer surface 10) of the wall structure 13. Between the side wall 29 and the wall structure 13 a gas-leakage gap 5 having a width D remains. The heat shield element 2 has a first surface 9 (also called an inner surface 9) directed to the wall structure 13 and a hot gas surface 27, which is opposite to the inner surface 9 and is exposed to a flow of hot exhaust gas 24. The inner surface 9 as well as outer surface 10 of the wall structure 13 may be curved, may change their shape (deform) while being exposed to a high temperature or may have steps or the like. Between the heat shield element 2 and the wall component 3, in particular between the inner surface 9 and the outer surface 10 a seal element 1 is positioned. In a cross-sectional view (see FIG. 4) the seal element 1 has an arc-like shape with contacting members 8 at the end of each side of the arc expanding almost perpendicular away from the ends of the arc. In a longitudinal direction the seal element 1 is curved along a centre line 26, which almost describes a circle. The seal element 1 is completely surrounded by a sealing structure 6 in form of a sleeving web made of fibres. Those fibres consist either of ceramic materials or of a heat resistant metal. So to some extend, depending on the mesh-size of the web the sleeving 6 the seal-element 1 is gas pervious. The sleeving 6 is tightened by a tightening member 20 so that its surface is in close contact with the outer surface 10 and the inner surface 9 for sealing the gap 5.

The sealing structure 4 is generally gas impervious and has a frame portion 7, which is slightly curved in a cross-section and ring-like curved along the centre line 26. It consists of a metal strip formed from a sheet metal. The metal chosen for the support structure 4 is preferably a heat resisting steel or a high temperature NiCr alloy. The width of the support structure 4 is greater than the width D of the gap 5. The support structure 4 gives the seal element 1 a good mechanical stiffness and elasticity, so that it also withstands highpressure loads and the risk of breaking into parts and falling through the gap is avoided. The support structure 4 is covered on all sides by the sleeving 6, in particular of ceramic fibres. The sleeving 6 of fibres defines a flexible and deformable sealing surface. The fibres consist preferably of a mixture of silica SiO₂ and alumina Al₂O₃, for example (in weight %) of 73% Al₂O₃ and 27% SiO₂ with γ-Al₂O₃ and amorphous SiO₂.

Between component 2 and component 3 a cooling gas region 28 is defined to which cooling gas 25 is supplied. The pressure of the cooling gas 25 is higher than the pressure of the hot gas 24, which flows through the turbine 22 in the hot gas flow region 11. Therefore a pressure difference exists which causes the seal element 1 to some extend to be pressed by the cooling gas 25 on the side wall 29 close to the gas-leakage gap 5. As the sealing structure 6 is to some extend gas pervious the cooling gas 25 flows through the sleeving 6 thereby cooling the fibres. This leads to an effusion cooling of the seal element 1. So also regions and turbine parts in the vicinity of the gap 5 outside of the cooling gas region 28 can be cooled. As the seal element 1 is capable to cope with deformations of the inner surface 9 and the outer surface 10 as well as radial and axial movements of the surfaces 9,10 an effective sealing of the gas-leakage gap 5 is assured and the amount of cooling fluid 25 needed is reduced. The cooling gas 25 saved in this way is now available for the combustion process.

FIG. 3 shows a plan view of a portion of the support structure 4 of the seal element 1 according to FIG 2 along the centre line 26. The support structure 4 has a frame portion 7, whereby on both sides of the centre line 26 contacting members 8 are connected to the frame portion 7 through a respective branch portion 21. So the contacting members 8 are connected to the frame portion 7 like vats. The support structure 4 with all its portions, frame portion 7, contacting members 8 and branch portion 21 can be manufacture from one single metal sheet. The support structure 4 with a number of vat-like contacting members 8, which together with the branch portions 21 are elastically deformable to follow movements or deformations of the first and second components 2,3, allow an efficient sealing of the gap 5.

In FIG. 4 a cross-sectional view of a seal element 1 along line III-III of FIG. 3 is shown. In this cross-sectional view the seal element 1 has a support structure 4 with a U-like shape, whereby the frame portion 7 forms the bottom of the U and the branch portions 21 form the sides of the U. At the end of each branch portion 21 a contacting member 8 extends perpendicular outwardly away from the branch portion 21. The support structure 4 is completely surrounded by the sealing structure 6. The sealing structure 6 is tightened by a tightening member 20, which pushes the web of the sealing structure 4 into the U-shaped support structure 4. So the web of the sealing structure 4 is tightened between two adjacent contacting members 8 along the centre line 26 and on the outer side of the support structure 4 between frame portion 7 and contacting members 8.

In FIG. 5 a fragmentary winding off view of the sealing structure 4 along line III-III of FIG. 3 is shown. The vat-like contacting member 8 is connected to the frame portion 7 by the branch portion 21. The branch portion 21 extends along a branch centre line 31, to which it is symmetric. Both contacting member 8 and branch portion 21 are made of an elastically deformable material, in particular a metal. As the contacting member 8 is connected to the branch portion 21 only in the vicinity of the branch centre line 31 it has two arms, which can deform independently from the branch portion 21. Furthermore the branch portion 21 itself can deform, in particular in a direction perpendicular to the connecting member 8. So the sealing structure 4 can compensate any movement or deformation of the surfaces 9, 10 with the contacting members 8 remaining in contact with the surfaces 9,10.

FIG. 6 shows a perspective view of a ring shaped seal element 1 with a sealing structure 4 having a frame portion 7, branch portions 21 and contacting members 8. The sealing structure 4 is introduced in a sleeving 6 made of heat resisting fibre web. A spring ring 20 is provided in the inner circle of the ring like seal element 1 pushing the sleeving 6 into the support structure 4 for tightening the sleeving 6.

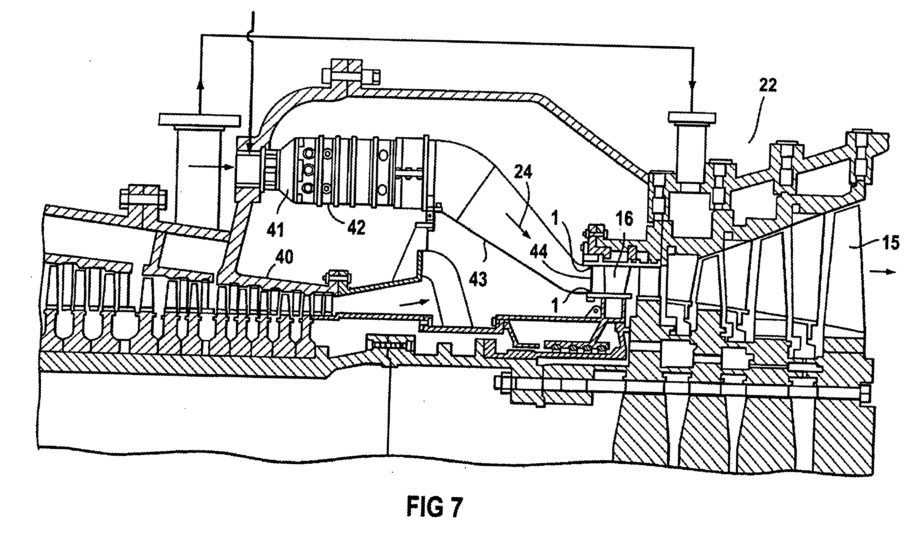

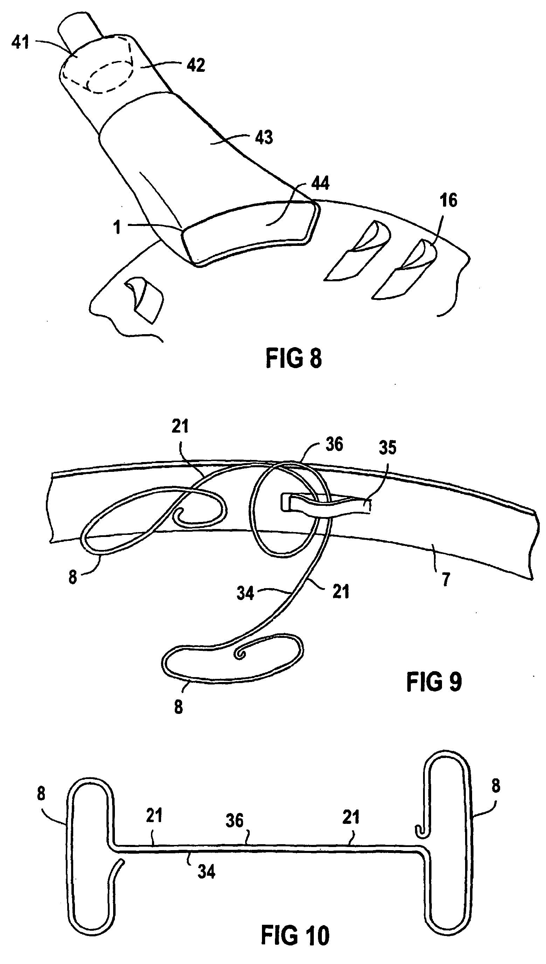

FIG. 7 is a cross-sectional view of a portion of a gas turbine 22 having a number of separate burners 41, examples of this kind of turbine are described in US Patents 5,566,42 and 5,623,819. As can be seen, the gas turbine 22 has a compressor 40 for producing compressed air. The compressed air discharged from the compressor 40 is directed into the burner 41, which is situated in a basket 42 (also called combustors) (only one of which is shown in FIG. 7). The compressed air is heated by the combustion of fuel to generate a hot gas 24. From the combustors 42, the hot gas 24 is directed by ducts 43(also called cans) to a turbine section 17.. Within the turbine section 17 the hot gas 24 flows over alternating rows of stationary vanes 16 and rotating blades 15. The turbine section 17 has a number of turbine inlets 44, each of which is assigned to one respective duct 43. The duct 43 ends in the vicinity of the turbine inlet 44 (see Fig 8 which provides a perspective view of this). The arrangement of duct 43 and turbine inlet 44 is sealed of by a seal element 1, which has the shape of a loop, in particular a almost rectangular loop following the shape of the turbine inlet. Fig. 9 shows a perspective partial view of a support structure 4 of a seal element 1. The support structure 4 has a frame portion 7, in particular a metal strip or the like. The frame portion 7 has a fastening hook 35 forming an opening through which a two-arm spring 34 is fastened to the frame portion 7. The two-arm spring 34 is made of a suitable metallic wire and has a middle portion 36, which forms a loop wound through the fastening hook 35. The middle portion 36 connects two arms of the spring 34, which form elastically deferrable branch portions 21 of the seal element 1. At the outer end of each branch portions 21 the spring 36 is bent to form contacting members 8 extending perpendicular to the branch portions 21. Fig 10 shows a winding off view of the spring 34 of the support structure 4, with the contacting members 8 forming an almost oval portion with a long straight, which long straight serves for contacting the sealing structure 6 to a respective of the surfaces 9,10 (see for example Fig. 2).

## Claims

1. A seal element (1) for sealing a gap (5) between a first component (2) and a second component (3) spaced apart from each other, said first component (2) having a first surface (9) and said second component (3) having an opposing second surfaces (10), said seal element (1) comprising:
a) a support structure (4),
b) a sealing structure (6) covering at least partially said support structure (4), wherein said support structure (4) comprises at least two contacting members (8), each contacting member (8) serves for putting a portion of the sealing structure (6) in contact with one of the surfaces (9,10) and being capable of following a deformation and/or movement of said surface (9,10),
**characterised in that,**
that said support structure (4) has a frame portion (7) to which said contacting members (8) is connected via a branch portion (21) extending away from said frame portion (7).

2. Seal element (1) according to claim 1, wherein said sealing structure (6) comprises a web having metallic and/or ceramic fibres.

3. Seal element (1) according to claim 2, wherein said sealing structure (6) comprises a ceramic fibre fabric, a ceramic fibre tape, a ceramic fibre sleeving or a ceramic fibre mat.

4. Seal element (1) according to claims 2 or 3, wherein said sealing structure (G) comprises ceramic fibres consisting of Zr02, Si02 and/or A1203.

5. Seal element (1) according to claim 2, wherein said sealing structure (6) comprises a metallic fibre fabric, a metallic fibre tape, a metallic fibre sleeving or a metallic fibre mat.

6. Seal element (1) according to any of the preceding claims, wherein said sealing structure (6) comprises metallic fibres consisting of a superalloy, in particular a nickel-based, a cobalt-based or ironbased superalloy.

7. Seal element (1) according to anyone of the preceding claims, wherein said sealing structure (6) is loosely connected to said support structure (4).

8. Seal element (1) according to anyone of the preceding claims, wherein said support structure (4) consists of a metal, in particular a sheet metal.

9. Seal element (1) according to anyone of the preceding claims, wherein said support structure (4) has a curved form, in particular is U-shaped, open-ring shaped or ring-shaped.

10. Seal element (1) according to anyone of the preceding claims, wherein said branch portion (21) and said contacting member (8) are elastically deformable.

11. Seal element (1) according to anyone of the preceding claims, wherein said support structure (4) has at least two branch portions (21) with different length.

12. Seal element (1) according to anyone of claims 1 to 9 or 11, wherein said branch portions (21) form together with a middle portion (36) a two-arm spring (34), which spring (34) is fastened to said frame portion (7) at said middle portion (36).

13. Seal element (1) according to anyone of the preceding claims, further comprising a tightening member (20) for tightening said sealing structure (6) between two adjacent contacting members (8).

14. Seal element (1) according to claim 13 wherein said tightening member (20) comprises a spring member, in particular a spring ring.

15. Seal element (1) according to anyone of the preceding claims in a hot gas chamber (23) having a hot-gas flow region (11), said hot gas chamber (23) having - a wall structure (13) surrounding said hot-gas flow region (11) and comprising said second component (3) having said second surface (10), - said first component (2) being attached to said wall structure (13) and having said First surface (10), which is directed to the wall structure (13), wherein said gap (5) is formed between said first component (3) and said second component (3), said sealing structure (6) being in contact with said second surfaces (10) of said second component (3) and with said first surface (9) of said first component (2) thereby sealing said gap (S).

16. Seal element (1) according to claim 15, wherein said hot gas chamber (23) is a part of a combustion turbine (22), in particular is a combustion chamber or a turbine section.

17. Seal element (1) according to claims 15 or 16, wherein said first component (2) is a heat shield element of a combustion chamber or a shroud element of a turbine section.

18. Seal element (1) according to anyone of the claims 1 to 14 in a combustion turbine (22) comprising a burner (41), a turbine section (17) having a turbine inlet (44) for hot gas (24) to enter said turbine section (17), a duct (43) connecting said burner (41) to said turbine section (17) for hot gas (24) to flow from said burner (41) to said turbine section (17), whereby said first surface (9) is formed by said turbine inlet (44) and said second surface (10) by said duct (43) in the vicinity of said turbine inlet (44), with said gap (5) between said first surface (9) and said second surface (10) sealed by said seal element (1).

19. A combustion turbine (22), comprising:
- a hot gas chamber (23) having a hot-gas flow region (11),
- a wall structure (13) surrounding said hot-gas flow region (11) and comprising at least one second component (3) having a second surface (10) directed to said hot-gas flow region (11),
- at least one first component (2) being attached to said wall structure (13) and having a first surface (9), which is directed to the wall structure (13),
- a gap (5) formed between said first component (2) and said second component (3)
- a seal element (1) for sealing said gap (5) said seal element (1) comprising:
a) a support structure (4),
b) a sealing structure (6) covering at least partially said support structure (4), wherein said support structure (4) comprises at least two contacting members (8), each contacting member (8) puts a portion of said sealing structure (6) in contact with one of said surfaces (9,10) and being capable of following a deformation of said respective surface (9,10), said sealing structure (6) being in contact with said second surface (10) of said second component (3) and with said first surface (9) of said first component (2) thereby sealing said gap (5)
**characterised in that,**
that said support structure (4) has a frame portion (7) to which said contacting members (8) is connected via a branch portion (21) extending away from said frame portion (7).

20. Combustion turbine (22) comprising a burner (41), a turbine section (17) having a turbine inlet (44) for hot gas (24) to enter said turbine section (17), a duct (43) connecting said burner (41) to said turbine section (17) for hot gas (24) to flow from said burner (41) to said turbine section (17), whereby a first surface (9) is formed by said turbine inlet (44) and a second surface (10) by said duct (43) in the vicinity of said turbine inlet (44), so that a gap (5) is formed between said first surface (9) and said second surface (10),
which gap (5) is sealed by a seal element (1),
said seal element (1) comprises:
a) a support structure (4),
b) a sealing structure (6) covering at least partially said support structure (4), wherein said support structure (4) comprises at least two contacting members (8), each contacting member (8) puts a portion of said sealing structure (6) in contact with one of the surfaces (9,10) and being capable of following a deformation and/or movement of said surface (9,10), said sealing structure (6) being in contact with said second surface (10) and with said first surface (9) thereby sealing said gap (5),
**characterised in that,**
that said support structure (4) has a frame portion (7) to which said contacting members (8) is connected via a branch portion (21) extending away from said frame portion (7).

21. Combustion turbine (22) according to claims 19 or 20, wherein said seal element (1) comprises a curved frame portion (7) from which said contacting members (8) are spaced apart and each contacting member (8) being connected to said frame portion (7) via a branch portion (21).

22. Combustion turbine (22) according to anyone of the claims 19 to 21, wherein said seal element (1) is surrounded by said sealing structure (6) being a sleeving.

## Patentansprüche

1. Dichtungselement (1) zur Abdichtung eines Spalts (5) zwischen einer ersten Komponente (2) und einer zweiten Komponente (3), die voneinander beabstandet sind, wobei die erste Komponente (2) eine erste Fläche (9) und die zweite Komponente (3) eine gegenüberliegende zweite Fläche (10) aufweist, wobei das Dichtungselement (1) Folgendes umfasst:
a) eine Stützstruktur (4),
b) eine Dichtungsstruktur (6), die die Stützstruktur (4) zumindest teilweise bedeckt, wobei die Stützstruktur (4) mindestens zwei Berührungsglieder (8) umfasst, wobei jedes Berührungsglied (8) dazu dient, einen Teil der Dichtungsstruktur (6) mit einer der Flächen (9, 10) in Berührung zu bringen, und einer Verformung und/oder Bewegung der Fläche (9, 10) folgen kann,
**dadurch gekennzeichnet, dass**
die Stützstruktur (4) einen Rahmenteil (7) aufweist, mit dem das Berührungsglied (8) über einen sich von dem Rahmenteil (7) weg erstreckenden Abzweigungsteil (21) verbunden ist.

2. Dichtungselement (1) nach Anspruch 1, wobei die Dichtungsstruktur (6) eine Bahn mit metallischen und/oder keramischen Fasern umfasst.

3. Dichtungselement (1) nach Anspruch 2, wobei die Dichtungsstruktur (6) ein Keramikfasergewebe, ein Keramikfaserband, einen Keramikfaserschlauch oder eine Keramikfasermatte umfasst.

4. Dichtungselement (1) nach Anspruch 2 oder 3, wobei die Dichtungsstruktur (G) aus Zr02, Si02 und/oder A1203 bestehende Keramikfasern umfasst.

5. Dichtungselement (1) nach Anspruch 2, wobei die Dichtungsstruktur (6) ein Metallfasergewebe, ein Metallfaserband, einen Metallfaserschlauch oder eine Metallfasermatte umfasst.

6. Dichtungselement (1) nach einem der vorhergehenden Ansprüche, wobei die Dichtungsstruktur (6) aus einer Superlegierung, insbesondere einer Superlegierung auf Nickelbasis, Kobaltbasis oder Eisenbasis, bestehende Metallfasern umfasst.

7. Dichtungselement (1) nach einem der vorhergehenden Ansprüche, wobei die Dichtungsstruktur (6) lose mit der Stützstruktur (4) verbunden ist.

8. Dichtungselement (1) nach einem der vorhergehenden Ansprüche, wobei die Stützstruktur (4) aus einem Metall, insbesondere einem Blech, besteht.

9. Dichtungselement (1) nach einem der vorhergehenden Ansprüche, wobei die Stützstruktur (4) eine gekrümmte Form, insbesondere eine U-Form, die Form eines offenen Rings oder eines Rings aufweist.

10. Dichtungselement (1) nach einem der vorhergehenden Ansprüche, wobei der Abzweigungsteil (21) und das Berührungsglied (8) elastisch verformbar sind.

11. Dichtungselement (1) nach einem der vorhergehenden Ansprüche, wobei die Stützstruktur (4) mindestens zwei Abzweigungsteile (21) mit unterschiedlicher Länge aufweist.

12. Dichtungselement (1) nach einem der Ansprüche 1 bis 9 oder 11, wobei die Abzweigungsteile (21) zusammen mit einem Mittelteil (36) eine zweiarmige Feder (34) bilden, wobei die Feder (34) an dem Mittelteil (36) an dem Rahmenteil (7) befestigt ist.

13. Dichtungselement (1) nach einem der vorhergehenden Ansprüche, das weiterhin ein Festziehglied (20) zum Festziehen der Dichtungsstruktur (6) zwischen zwei benachbarten Berührungsgliedern (8) umfasst.

14. Dichtungselement (1) nach Anspruch 13, wobei das Festziehglied (20) ein Federglied, insbesondere einen Federring, umfasst.

15. Dichtungselement (1) nach einem der vorhergehenden Ansprüche in einer Heißgaskammer (23) mit einem Heißgasstrombereich (11), wobei die Heißgaskammer (23) eine Wandstruktur (13) aufweist, die den Heißgasstrombereich (11) umgibt und die zweite Komponente (3) mit der zweiten Fläche (10) umfasst, wobei die erste Komponente (2) an der Wandstruktur (13) befestigt ist und die erste Fläche (10) aufweist, die zur Wandstruktur (13) weist, wobei der Spalt (5) zwischen der ersten Komponente (2) und der zweiten Komponente (3) gebildet ist, wobei die Dichtungsstruktur (6) mit der zweiten Fläche (10) der zweiten Komponente (3) und mit der ersten Fläche (9) der ersten Komponente (2) in Kontakt steht, wodurch der Spalt (S) abgedichtet wird.

16. Dichtungselement (1) nach Anspruch 15, wobei die Heißgaskammer (23) Teil einer Verbrennungsturbine, insbesondere eine Brennkammer oder ein Turbinenabschnitt, ist.

17. Dichtungselement (1) nach Anspruch 15 oder 16, wobei die erste Komponente (2) ein Wärmeschildelement einer Brennkammer oder ein Deckbandelement eines Turbinenabschnitts ist.

18. Dichtungselement (1) nach einem der Ansprüche 1 bis 14 in einer Verbrennungsturbine (22), die einen Brenner (41), einen Turbinenabschnitt (17) mit einem Turbineneinlass (44), durch den Heißgas in den Turbinenabschnitt (17) eintreten kann, und einen den Brenner (41) mit dem Turbinenabschnitt (17) verbindenden Kanal (43), durch den Heißgas (24) von dem Brenner (41) zu dem Turbinenabschnitt (17) strömen kann, umfasst, wobei die erste Fläche (9) durch den Turbineneinlass (44) und die zweite Fläche (10) durch den Kanal (43) in der Nähe des Turbineneinlasses (44) gebildet wird, wobei der Spalt (5) zwischen der ersten Fläche (9) und der zweiten Fläche (10) durch das Dichtungselement (1) abgedichtet wird.

19. Verbrennungsturbine (22), die Folgendes umfasst:
- eine Heißgaskammer (23) mit einem Heißgasstrombereich (11),
- eine Wandstruktur (13), die den Heißgasstrombereich (11) umgibt und mindestens eine zweite Komponente (3) mit einer zweiten Fläche (10), die zum Heißgasstrombereich (11) weist, umfasst,
- mindestens eine erste Komponente (2), die an der Wandstruktur (13) befestigt ist und eine erste Fläche (9) aufweist, die zur Wandstruktur (13) weist,
- einen zwischen der ersten Komponente (2) und der zweiten Komponente (3) gebildeten Spalt (5),
- ein Dichtungselement (1) zur Abdichtung des Spalts (5), wobei das Dichtungselement (1) Folgendes umfasst:
a) eine Stützstruktur (4),
b) eine Dichtungsstruktur (6), die die Stützstruktur (4) zumindest teilweise bedeckt, wobei die Stützstruktur (4) mindestens zwei Berührungsglieder (8) umfasst, wobei jedes Berührungsglied (8) einen Teil der Dichtungsstruktur (6) mit einer der Flächen (9, 10) in Berührung bringt und einer Verformung der jeweiligen Fläche (9, 10) folgen kann, wobei die Dichtungsstruktur (6) die zweite Fläche (10) der zweiten Komponente (3) und die erste Fläche (9) der ersten Komponente (2) berührt, wodurch der Spalt (5) abgedichtet wird,
**dadurch gekennzeichnet, dass**
die Stützstruktur (4) einen Rahmenteil (7) aufweist, mit dem das Berührungsglied (8) über einen sich von dem Rahmenteil (7) weg erstreckenden Abzweigungsteil (21) verbunden ist.

20. Verbrennungsturbine (22), die einen Brenner (41), einen Turbinenabschnitt (17) mit einem Turbineneinlass (44), durch den Heißgas (24) in den Turbinenabschnitt (17) eintreten kann, und einen den Brenner (41) mit dem Turbinenabschnitt (17) verbindenden Kanal (43), durch den Heißgas (24) von dem Brenner (41) zu dem Turbinenabschnitt (17) strömen kann, umfasst, wobei die erste Fläche (9) durch den Turbineneinlass (44) und die zweite Fläche (10) durch den Kanal (43) in der Nähe des Turbineneinlasses (44) gebildet wird, so dass zwischen der ersten Fläche (9) und der zweiten Fläche (10) ein Spalt (5) gebildet wird, wobei der Spalt (5) durch ein Dichtungselement (1) abgedichtet wird,
wobei das Dichtungselement (1) Folgendes umfasst:
a) eine Stützstruktur (4),
b) eine Dichtungsstruktur (6), die die Stützstruktur (4) zumindest teilweise bedeckt, wobei die Stützstruktur (4) mindestens zwei Berührungsglieder (8) umfasst, wobei jedes Berührungsglied (8) einen Teil der Dichtungsstruktur (6) mit einer der Flächen (9, 10) in Berührung bringt und einer Verformung und/oder Bewegung der jeweiligen Fläche (9, 10) folgen kann, wobei die Dichtungsstruktur (6) die zweite Fläche (10) und die erste Fläche (9) berührt, wodurch der Spalt (5) abgedichtet wird,
**dadurch gekennzeichnet, dass**
die Stützstruktur (4) einen Rahmenteil (7) aufweist, mit dem das Berührungsglied (8) über einen sich von dem Rahmenteil (7) weg erstreckenden Abzweigungsteil (21) verbunden ist.

21. Verbrennungsturbine (22) nach Anspruch 19 oder 20, wobei das Dichtungselement (1) einen gekrümmten Rahmenteil (7) umfasst, von dem die Berührungsglieder (8) beabstandet sind, und jedes Berührungsglied (8) über einen Abzweigungsteil (21) mit dem Rahmenteil (7) verbunden ist.

22. Verbrennungsturbine (22) nach einem der Ansprüche 19 bis 21, wobei das Dichtungselement (1) von der Dichtungsstruktur (6), bei der es sich um einen Schlauch handelt, umgeben ist.

## Revendications

1. Elément ( 1 ) d'étanchéité pour rendre étanche un intervalle ( 5 ) entre un premier élément ( 2 ) et un deuxième élément ( 3 ) à distance l'un de l'autre, le premier élément ( 2 ) ayant une première surface ( 9 ) et le deuxième élément ( 3 ) ayant une deuxième surface ( 10 ) opposée, l'élément ( 1 ) d'étanchéité comprenant :
a ) une structure ( 4 ) de support,
b ) une structure ( 6 ) d'étanchéité recouvrant au moins en partie la structure ( 4 ) de support, la structure ( 4 ) de support comprenant au moins deux éléments ( 8 ) de contact, chaque élément ( 8 ) de contact servant à mettre une partie de la structure ( 6 ) d'étanchéité en contact avec l'une des surfaces ( 9, 10 ) et étant apte à suivre une déformation et/ou un mouvement de cette surface ( 9, 10 ),
**caractérisé en ce que**
la structure ( 4 ) de support a une partie ( 7 ) de cadre, à laquelle les éléments ( 8 ) de contact sont reliés par une partie ( 21 ) de ramification s'éloignant de la partie ( 7 ) de cadre.

2. Elément ( 1 ) d'étanchéité suivant la revendication 1, dans lequel la structure ( 6 ) d'étanchéité comprend une nappe ayant des fibres métalliques et/ou céramiques.

3. Elément ( 1 ) d'étanchéité suivant la revendication 2, dans lequel la structure ( 6 ) d'étanchéité comprend une toile en fibres de céramique, un ruban en fibres de céramique, un manchon en fibres de céramique ou une nappe en fibres de céramique.

4. Elément ( 1 ) d'étanchéité suivant la revendication 2 ou 3, dans lequel la structure ( G ) d'étanchéité comprend des fibres de céramique consistant en ZrO₂, SiO₂ et/ou Al₂O₃.

5. Elément ( 1 ) d'étanchéité suivant la revendication 2, dans lequel la structure ( 6 ) d'étanchéité comprend une toile en fibres métalliques, un ruban en fibres métalliques, un manchon en fibres métalliques ou une nappe en fibres métalliques.

6. Elément ( 1 ) d'étanchéité suivant l'une quelconque des revendications précédentes, dans lequel la structure ( 6 ) d'étanchéité comprend des fibres métalliques constituées d'un superalliage, en particulier d'un superalliage à base de nickel, à base de cobalt ou à base de fer.

7. Elément ( 1 ) d'étanchéité suivant l'une quelconque des revendications précédentes, dans lequel la structure ( 6 ) d'étanchéité est reliée de manière lâche à la structure ( 4 ) de support.

8. Elément ( 1 ) d'étanchéité suivant l'une quelconque des revendications précédentes, dans lequel la structure ( 4 ) de support consiste en un métal, en particulier en un métal en feuille.

9. Elément ( 1 ) d'étanchéité suivant l'une quelconque des revendications précédentes, dans lequel la structure ( 4 ) de support a une forme courbée, en particulier une forme en U, une forme en anneau ouvert ou une forme annulaire.

10. Elément ( 1 ) d'étanchéité suivant l'une quelconque des revendications précédentes, dans lequel la branche ( 21 ) et l'élément ( 8 ) de contact sont déformables élastiquement.

11. Elément ( 1 ) d'étanchéité suivant l'une quelconque des revendications précédentes, dans lequel la structure ( 4 ) de support a au moins deux branches ( 21 ) de longueurs différentes.

12. Elément ( 1 ) d'étanchéité suivant l'une quelconque des revendications 1 à 9 ou 11, dans lequel les branches ( 21 ) forment, ensemble avec une partie ( 36 ) médiane, un ressort ( 34 ) à deux bras, ce ressort ( 34 ) étant fixé à la partie ( 7 ) de cadre en la partie ( 36 ) médiane.

13. Elément ( 1 ) d'étanchéité suivant l'une quelconque des revendications précédentes, comprenant en outre un élément ( 20 ) de serrage pour serrer la structure ( 6 ) d'étanchéité entre deux éléments ( 8 ) de contact voisins.

14. Elément ( 1 ) d'étanchéité suivant la revendication 13, dans lequel l'élément ( 20 ) de serrage comprend un élément à ressort, en particulier un jonc élastique.

15. Elément ( 1 ) d'étanchéité suivant l'une quelconque des revendications précédentes dans une chambre ( 23 ) pour du gaz chaud ayant une région ( 11 ) d'écoulement de gaz chaud, la chambre ( 23 ) pour du gaz chaud ayant une structure ( 13 ) de paroi entourant la région ( 11 ) d'écoulement du gaz chaud et comprenant le deuxième élément ( 3 ) ayant la deuxième surface ( 10 ), le premier élément ( 2 ) étant fixé à la structure ( 13 ) de paroi et ayant la première surface ( 10 ) qui est dirigée vers la structure ( 13 ) de paroi, dans lequel l'intervalle ( 5 ) est formé entre le premier élément ( 3 ) et le deuxième élément ( 3 ), la structure ( 6 ) d'étanchéité étant en contact avec la deuxième surface ( 10 ) du deuxième élément ( 3 ) et avec la première surface ( 9 ) du premier élément ( 2 ), en rendant ainsi étanche l'intervalle ( S ).

16. Elément ( 1 ) d'étanchéité suivant la revendication 15, dans lequel la chambre ( 23 ) pour du gaz chaud fait partie d'une turbine ( 22 ) à combustion, en particulier est une chambre de combustion ou une section de turbine.

17. Elément ( 1 ) d'étanchéité suivant les revendications 15 ou 16, dans lequel le premier élément ( 2 ) est un élément de bouclier thermique d'une chambre de combustion ou un élément de renfort d'une section de turbine.

18. Elément ( 1 ) d'étanchéité suivant l'une quelconque des revendications 1 à 14 dans une turbine ( 22 ) à combustion comprenant un brûleur ( 41 ), une section ( 17 ) de turbine ayant une entrée ( 44 ) de turbine pour que du gaz ( 24 ) chaud entre dans la section ( 17 ) de turbine, un conduit ( 43 ) mettant le brûleur ( 41 ) en communication avec la section ( 17 ) de turbine pour que du gaz ( 24 ) chaud passe du brûleur ( 41 ) à la section ( 17 ) de turbine, la première surface ( 9 ) étant formée par l'entrée ( 44 ) de turbine et la deuxième surface ( 10 ) par le conduit ( 43 ) à proximité de l'entrée ( 44 ) de turbine, l'intervalle ( 5 ) compris entre la première surface ( 9 ) et la deuxième surface ( 10 ) étant rendu étanche par l'élément ( 1 ) d'étanchéité.

19. Turbine ( 22 ) à combustion, comprenant :
- une chambre ( 23 ) pour du gaz chaud ayant une région ( 11 ) d'écoulement de gaz chaud,
- une structure ( 13 ) de paroi entourant la région ( 11 ) d'écoulement de gaz chaud et comprenant au moins un deuxième élément ( 3 ) ayant une deuxième surface ( 10 ) dirigée vers la région ( 11 ) d'écoulement du gaz chaud,
- au moins un premier élément ( 2 ) étant fixé à la structure ( 13 ) de paroi et ayant une première surface ( 9 ) qui est dirigée vers la structure ( 13 ) de paroi,
- un intervalle ( 5 ) formé entre le premier élément ( 2 ) et le deuxième élément ( 3 ),
- un élément ( 1 ) d'étanchéité pour rendre étanche l'intervalle ( 5 ), l'élément ( 1 ) d'étanchéité comprenant :
a ) une structure ( 4 ) de support,
b ) une structure ( 6 ) d'étanchéité recouvrant au moins en partie la structure ( 4 ) de support, la structure ( 4 ) de support comprenant au moins deux éléments ( 8 ) de contact, chaque élément ( 8 ) de contact mettant une partie de la structure ( 6 ) d'étanchéité en contact avec l'une des surfaces ( 9, 10 ) et étant susceptible de suivre une déformation de la surface ( 9, 10 ) respective, la structure ( 6 ) d'étanchéité étant en contact avec la deuxième surface ( 10 ) du deuxième élément ( 3 ) et avec la première surface ( 9 ) du premier élément ( 2 ), en rendant ainsi étanche l'intervalle ( 5 ),
**caractérisé en ce que**
la structure ( 4 ) de support a une partie ( 7 ) de cadre à laquelle les éléments ( 8 ) de contact sont reliés par une branche ( 21 ) s'éloignant de la partie ( 7 ) de cadre.

20. Turbine ( 22 ) à combustion comprenant un brûleur ( 41 ), une section ( 17 ) de turbine ayant une entrée ( 44 ) de turbine pour que du gaz ( 24 ) chaud entre dans la section ( 17 ) de turbine, un conduit ( 43 ) mettant le brûleur ( 41 ) en communication avec la section ( 17 ) de turbine pour que du gaz ( 24 ) chaud passe du brûleur ( 41 ) à la section ( 17 ) de turbine, une première surface ( 9 ) étant formée par l'entrée ( 44 ) de turbine et une deuxième surface ( 10 ) par le conduit ( 43 ) à proximité de l'entrée ( 44 ) de turbine, de manière à former un intervalle ( 5 ) entre la première surface ( 9 ) et la deuxième surface ( 10 ),
cet intervalle ( 5 ) étant rendu étanche par un élément ( 1 ) d'étanchéité,
et l'élément ( 1 ) d'étanchéité comprend :
a ) une structure ( 4 ) de support,
b ) une structure ( 6 ) d'étanchéité recouvrant au moins en partie la structure ( 4 ) de support, la structure ( 4 ) de support comprenant au moins deux éléments ( 8 ) de contact, chaque élément ( 8 ) de contact mettant une partie de la structure ( 6 ) d'étanchéité en contact avec l'une des surfaces ( 9, 10 ) et étant susceptible de suivre une déformation et/ou un mouvement de la surface ( 9, 10 ) respective, la structure ( 6 ) d'étanchéité étant en contact avec la deuxième surface ( 10 ) et avec la première surface ( 9 ), en rendant ainsi étanche l'intervalle ( 5 ),
**caractérisé en ce que**
la structure ( 4 ) de support a une partie ( 7 ) de cadre à laquelle les éléments ( 8 ) de contact sont reliés par une partie ( 21 ) de ramification s'éloignant de la partie ( 7 ) de cadre.

21. Turbine ( 22 ) à combustion suivant les revendications 19 ou 20, dans laquelle l'élément ( 1 ) d'étanchéité comprend une partie ( 7 ) de cadre courbée à partir de laquelle les éléments ( 8 ) de contact sont espacés et chaque élément ( 8 ) de contact étant relié à la partie ( 7 ) de cadre par une branche ( 21 ).

22. Turbine ( 22 ) à combustion suivant l'une quelconque des revendications 19 à 21, dans laquelle l'élément ( 1 ) d'étanchéité est entouré de la structure ( 6 ) d'étanchéité qui est un manchon.
